# EUROPEAN PATENT APPLICATION

(11) **EP 4 559 772 A1**
(43) Date of publication of application: **28.05.2025**
(21) Application number: 23851375.8
(22) Date of filing: 15.06.2023
(51) Int. Cl.: B60W 30/18, B60W 60/00, G05D 1/20

(54) **NARROW-LANE PASS-THROUGH METHOD AND APPARATUS, AND VEHICLE**

(30) Priority: 11.08.2022 CN 202210961414
(71) Applicant: Shenzhen Yinwang Intelligent Technologies Co., Ltd., Shenzhen, Guangdong 518129 (CN)
(72) Inventor: WANG, Junxia, Shenzhen, Guangdong 518129 (CN); HU, Wenxiao, Shenzhen, Guangdong 518129 (CN)
(74) Representative: Maiwald GmbH
(86) International application number: PCT/CN2023/100497
(87) International publication number: WO 2024/032148

(57) **Abstract**

Embodiments of this application provide a narrow road passing method and apparatus, and a vehicle. The method includes: when a vehicle travels into a first narrow road, obtaining environment information of the first narrow road; and controlling, based on the environment information, the vehicle to automatically travel on some or all of road sections of the first narrow road. Embodiments of this application may be applied to an intelligent vehicle or an electric vehicle, to help improve intelligence of the vehicle, and help improve driving experience of a user when the vehicle passes through a narrow road.

## Description

This application claims priority to Chinese Patent Application No. 202210961414.5, filed with the China National Intellectual Property Administration on August 11, 2022 and entitled "NARROW ROAD PASSING METHOD AND APPARATUS, AND VEHICLE", which is incorporated herein by reference in its entirety.

### TECHNICAL FIELD

Embodiments of this application relate to the field of intelligent driving, and more specifically, to a narrow road passing method and apparatus, and a vehicle.

### BACKGROUND

Currently, when a vehicle passes through a narrow road, a narrow-road assistance function that can be used by a user is generally activating a front view and a 360° top view of the vehicle. Such a narrow-road assistance function focuses more on warning, which is insufficient for the user. For example, when driving a vehicle to pass through a narrow road, the user still does not know how to turn a steering wheel to avoid collision with an obstacle (for example, a curb). Therefore, how to improve driving experience of a user when the user drives a vehicle to pass through a narrow road becomes a problem to be urgently resolved.

### SUMMARY

Embodiments of this application provide a narrow road passing method and apparatus, and a vehicle, to help improve driving experience of a user when the vehicle passes through a narrow road.

The vehicle in this application may be a vehicle in a broad sense, and may be a transportation tool (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), an amusement device, or a toy vehicle. A type of the vehicle is not specifically limited in embodiments of this application.

According to a first aspect, a narrow road passing method is provided. The method includes: when a vehicle travels into a first narrow road, obtaining environment information of the first narrow road; and controlling, based on the environment information, the vehicle to automatically travel on some or all of road sections of the first narrow road.

In this embodiment of this application, the vehicle may obtain environment information of a narrow road when passing through the narrow road, so that the vehicle can control, based on the environment information, the vehicle to automatically travel on some or all of road sections of the narrow road. In this way, the vehicle can automatically pass through some or all of the road sections of the narrow road based on a memory of an ambient environment of the narrow road, and the user does not need to manually drive the vehicle to pass through the narrow road. This helps improve intelligence of the vehicle, and helps improve driving experience of the user when the vehicle passes through the narrow road.

In some possible implementations, the method further includes: when a difference between a width of a road on which the vehicle is located and a width of the vehicle is less than or equal to a preset threshold, determining that the vehicle travels into the first narrow road.

With reference to the first aspect, in some implementations of the first aspect, before the controlling, based on the environment information, the vehicle to automatically travel on some or all of road sections of the first narrow road, the method further includes: when the vehicle travels into the first narrow road again, prompting a user to automatically pass through the first narrow road. The controlling, based on the environment information, the vehicle to automatically travel on some or all of road sections of the first narrow road includes: when an operation that the user indicates to automatically pass through the first narrow road is detected, controlling, based on the environment information, the vehicle to automatically pass through all of the road sections of the first narrow road.

In this embodiment of this application, when the vehicle travels into the first narrow road again, the user may be prompted to automatically pass through the narrow road. When an operation that the user indicates to automatically pass through the narrow road is detected, the vehicle may be controlled, based on the previously obtained environment information of the narrow road, to automatically pass through all of the road sections of the first narrow road. In this way, the user does not need to manually drive the vehicle to pass through the narrow road. This helps improve intelligence of the vehicle, and helps improve driving experience of the user when the vehicle passes through the narrow road.

In some possible implementations, the prompting the user to automatically pass through the first narrow road includes: prompting the user to automatically pass through the first narrow road, and displaying a traveling track from a start point of the first narrow road to an end point of the first narrow road. The controlling, based on the environment information, the vehicle to automatically pass through all of the road sections of the first narrow road includes: controlling, based on the traveling track, the vehicle to automatically travel from the start point of the first narrow road to the end point of the first narrow road.

With reference to the first aspect, in some implementations of the first aspect, the environment information includes a location of a first meeting point, and before the controlling, based on the environment information, the vehicle to automatically travel on some or all of road sections of the first narrow road, the method further includes: detecting that the vehicle and another vehicle meet at a first location of the first narrow road; and when the first location cannot satisfy a meeting condition, prompting the user to automatically drive from a current location of the vehicle to the location of the first meeting point. The controlling, based on the environment information, the vehicle to automatically travel on some or all of road sections of the first narrow road includes: when an operation that the user indicates to automatically travel from the current location to the location of the first meeting point is detected, controlling, based on the environment information, the vehicle to automatically travel from the current location to the location of the first meeting point.

In this embodiment of this application, when the first location cannot satisfy a condition that the vehicle meets the another vehicle, the vehicle may prompt, based on location information of the first meeting point that is stored in the environment information, the user to automatically drive from the current location to the location of the first meeting point. In this way, the user does not need to manually drive the vehicle from the current location to the location of the first meeting point, and the user also does not need to actively memorize the location of the first meeting point. This helps improve intelligence of the vehicle, and helps improve driving experience of the user when the vehicle passes through the narrow road.

In some possible implementations, the prompting the user to automatically drive from a current location to the location of the first meeting point includes: prompting the user to automatically drive from the current location to the location of the first meeting point, and controlling an in-vehicle display to display a traveling track from the current location to the location of the first meeting point. The controlling, based on the environment information, the vehicle to automatically travel from the current location to the location of the first meeting point includes: controlling, based on the traveling track, the vehicle to automatically travel from the current location to the location of the first meeting point.

In some possible implementations, the first meeting point is a meeting point that satisfies a condition that the vehicle and the another vehicle pass at the same time.

With reference to the first aspect, in some implementations of the first aspect, before the controlling, based on the environment information, the vehicle to automatically travel on some or all of road sections of the first narrow road, the method further includes: when the vehicle travels to a second location of the first narrow road and a reverse operation of the user is detected, prompting the user to automatically reverse from the second location to a third location. The controlling, based on the environment information, the vehicle to automatically travel on some or all of road sections of the first narrow road includes: when an operation that the user indicates to automatically reverse from the second location to the third location is detected, controlling, based on the environment information, the vehicle to automatically reverse from the second location to the third location.

In this embodiment of this application, when detecting, at the second location, the reverse operation of the user, the vehicle may prompt the user to automatically reverse from the second location to the third location. When the operation that the user indicates to automatically reverse from the second location to the third location is detected, the vehicle may be controlled, based on the environment information, to automatically reverse from the second location to the third location. In this way, the user does not need to manually drive the vehicle to reverse from the second location to the third location. This helps improve intelligence of the vehicle, and helps improve driving experience of the user when the vehicle reverses in the narrow road.

For example, in a process in which the user drives the vehicle to find a parking space in a parking lot, the user drives the vehicle into a narrow road. After driving for a distance on the narrow road, the user finds that the vehicle cannot move forward and has to reverse. In this case, the vehicle may plan, based on a memory of the environment information of the narrow road, a traveling track for automatically reversing from the current location of the vehicle to the start point of the narrow road, and prompt the user to automatically reverse, by using the traveling track, to the start point of the narrow road. In this way, a security risk that may occur when the user manually drives the vehicle to reverse on the narrow road can be avoided, and driving experience of the user when the vehicle passes through the narrow road can be improved.

In some possible implementations, the prompting the user to automatically reverse from the second location to a third location includes: prompting the user to automatically reverse from the second location to the third location, and controlling the in-vehicle display to display a traveling track for automatically reversing from the second location to the third location. The controlling, based on the environment information, the vehicle to automatically reverse from the second location to the third location includes: controlling, based on the traveling track, the vehicle to automatically reverse from the second location to the third location.

With reference to the first aspect, in some implementations of the first aspect, the third location is a start location of the narrow road or the third location is a location of a second meeting point, and the environment information includes the location of the second meeting point.

With reference to the first aspect, in some implementations of the first aspect, before the obtaining environment information of the first narrow road, the method further includes: determining that the first narrow road is a fixed narrow road.

In this embodiment of this application, before the environment information of the first narrow road is obtained, it may be first determined that the first narrow road is a fixed narrow road. In this way, a waste of computing resources caused by a memory of a temporary narrow road can be avoided.

In some possible implementations, the determining that the first narrow road is a fixed narrow road includes: determining that the first narrow road is not a temporary narrow road.

For example, when the vehicle determines that a height of a fixed obstacle (for example, a curb or a stone block) on two sides of the vehicle is greater than or equal to a preset height, and that a difference between a width of a road and the width of the vehicle is less than or equal to a preset width, the vehicle may determine that the current road is a fixed narrow road.

For another example, the fixed narrow road does not include a narrow road temporarily formed due to vehicle meeting, avoiding another vehicle, or the like in a process of driving on a normal road.

With reference to the first aspect, in some implementations of the first aspect, the method further includes: when the vehicle moves forward to pass through the first narrow road, displaying blind spot images of a left front side and a right front side of the vehicle; or when the vehicle reverses to pass through the first narrow road, displaying blind spot images of a left rear side and a right rear side of the vehicle.

In this embodiment of this application, when the vehicle moves forward or reverses to pass through the first narrow road, blind spot images of both sides may be displayed. This helps the user view environments on both sides of the vehicle in time, and helps the user manually drive the vehicle to pass through the first narrow road. Alternatively, when the vehicle automatically passes through the first narrow road, the user can learn safety of the vehicle in time in an automatic driving process.

According to a second aspect, a narrow road passing apparatus is provided. The apparatus includes: an obtaining unit, configured to: when a vehicle travels into a first narrow road, obtain environment information of the first narrow road; and a control unit, configured to control, based on the environment information, the vehicle to automatically travel on some or all of road sections of the first narrow road.

With reference to the second aspect, in some implementations of the second aspect, the apparatus further includes a first prompt unit and a first detection unit. The first prompt unit is configured to: when the vehicle travels into the first narrow road again, prompt a user to automatically pass through the first narrow road. The control unit is configured to: when the first detection unit detects an operation that the user indicates to automatically pass through the first narrow road, control, based on the environment information, the vehicle to automatically pass through all of the road sections of the first narrow road.

With reference to the second aspect, in some implementations of the second aspect, the environment information includes a location of a first meeting point, and the apparatus further includes a second prompt unit and a second detection unit. The second detection unit is configured to detect that the vehicle and another vehicle meet at a first location of the first narrow road. The second prompt unit is configured to: when the first location cannot satisfy a meeting condition, prompt the user to automatically drive from a current location of the vehicle to the location of the first meeting point. The control unit is configured to: when the second detection unit detects an operation that the user indicates to automatically travel from the current location to the location of the first meeting point, control, based on the environment information, the vehicle to automatically travel from the current location to the location of the first meeting point.

With reference to the second aspect, in some implementations of the second aspect, the apparatus further includes a third prompt unit and a third detection unit. The third prompt unit is configured to: when the vehicle travels to a second location of the first narrow road and the third detection unit detects a reverse operation of the user, prompt the user to automatically reverse from the second location to a third location. The control unit is configured to: when the third detection unit detects an operation that the user indicates to automatically reverse from the second location to the third location, control, based on the environment information, the vehicle to automatically reverse from the second location to the third location.

With reference to the second aspect, in some implementations of the second aspect, the third location is a start location of the narrow road or the third location is a location of a second meeting point, and the environment information includes the location of the second meeting point.

With reference to the second aspect, in some implementations of the second aspect, the apparatus further includes a determining unit. The method further includes: The determining unit is configured to: before the obtaining unit obtains the environment information of the first narrow road, determine that the first narrow road is a fixed narrow road.

With reference to the second aspect, in some implementations of the second aspect, the control unit is further configured to: when the vehicle moves forward to pass through the first narrow road, control an in-vehicle display to display blind spot images of a left front side and a right front side of the vehicle; or when the vehicle reverses to pass through the first narrow road, control the in-vehicle display to display blind spot images of a left rear side and a right rear side of the vehicle.

According to a third aspect, an apparatus is provided. The apparatus includes a processing unit and a storage unit. The storage unit is configured to store instructions, and the processing unit executes the instructions stored in the storage unit, so that the apparatus performs the method in any possible implementation of the first aspect.

Optionally, the processing unit may include at least one processor, and the storage unit may be a memory. The memory may be a storage unit (for example, a register or a cache) in a chip, or may be a storage unit (for example, a read-only memory or a random access memory) located outside the chip in a vehicle.

According to a fourth aspect, a vehicle is provided. The vehicle includes the apparatus according to any one of the second aspect or the third aspect.

According to a fifth aspect, a computer program product is provided. The computer program product includes computer program code, and when the computer program code is run on a computer, the computer is enabled to perform the method in any possible implementation of the first aspect.

It should be noted that all or some of the computer program code may be stored in a first storage medium. The first storage medium may be encapsulated together with a processor, or may be encapsulated separately from a processor. This is not specifically limited in embodiments of this application.

According to a sixth aspect, a computer-readable medium is provided. The computer-readable medium stores program code. When the computer program code is run on a computer, the computer is enabled to perform the method in any possible implementation of the first aspect.

According to a seventh aspect, an embodiment of this application provides a chip system. The chip system includes a processor, configured to invoke a computer program or computer instructions stored in a memory, so that the processor performs the method in any possible implementation of the first aspect.

With reference to the seventh aspect, in a possible implementation, the processor is coupled to the memory through an interface.

With reference to the seventh aspect, in a possible implementation, the chip system further includes the memory. The memory stores the computer program or the computer instructions.

### BRIEF DESCRIPTION OF DRAWINGS

FIG. 1 is a functional block diagram of a vehicle according to an embodiment of this application;
FIG. 2 is a diagram of an example of display distribution in a vehicle cockpit according to an embodiment of this application;
FIG. 3 shows a graphical user interface GUI according to an embodiment of this application;
FIG. 4(a) and FIG. 4(b) show a group of GUIs according to an embodiment of this application;
FIG. 5(a) to FIG. 5(c) show another group of GUIs according to an embodiment of this application;
FIG. 6 is a diagram of an intelligent narrow-road assistance system according to an embodiment of this application;
FIG. 7 is a flowchart of a narrow road passing method according to an embodiment of this application;
FIG. 8 shows another GUI according to an embodiment of this application;
FIG. 9 is another flowchart of a narrow road passing method according to an embodiment of this application;
FIG. 10 is another flowchart of a narrow road passing method according to an embodiment of this application; and
FIG. 11 is a block diagram of a narrow road passing apparatus according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The prefix words "first", "second", and the like in embodiments of this application are merely intended to distinguish between different objects, and impose no limitation on locations, sequences, priorities, quantities, content, or the like of the described objects. In embodiments of this application, use of the prefix word, for example, an ordinal number, used to distinguish between described objects does not constitute a limitation on the described objects. For a description of the described objects, refer to the description of the context in claims or embodiments. Use of such a prefix word should not constitute a redundant limitation. In addition, in descriptions of embodiments, unless otherwise specified, "a plurality of" means two or more.

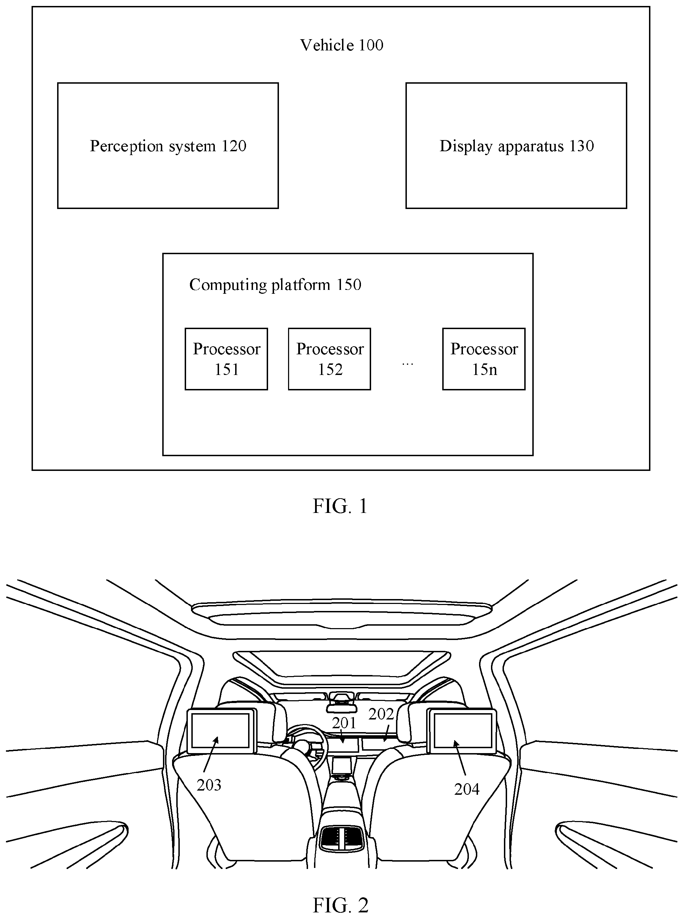

FIG. 1 is a functional block diagram of a vehicle 100 according to an embodiment of this application. The vehicle 100 may include a perception system 120, a display apparatus 130, and a computing platform 150. The perception system 120 may include one or more sensors that sense information about an ambient environment of the vehicle 100. For example, the perception system 120 may include a positioning system. The positioning system may be a global positioning system (global positioning system, GPS), or may be one or more of a BeiDou system or another positioning system, an inertial measurement unit (inertial measurement unit, IMU), a lidar, a millimeter-wave radar, an ultrasonic radar, and a camera apparatus.

Some or all functions of the vehicle 100 may be controlled by a computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions, and some or all of the processors 151 to 15n may invoke the instructions in the memory and execute the instructions, to implement a corresponding function.

The display apparatus 130 in a cockpit is mainly classified into two types. A first type is an in-vehicle display, and a second type is a projection display, for example, a head-up display (head-up display, HUD) apparatus. The in-vehicle display is a physical display, and is an important part of an in-vehicle infotainment system. A plurality of displays may be disposed in the cockpit, for example, a digital instrument display, a central display screen, a display in front of a passenger (which is also referred to as a passenger in a front seat) in a co-driver's seat, a display in front of a passenger in a rear-left seat, and a display in front of a passenger in a rear-right seat, and even a vehicle window may be used as a display for display. A head-up display is also referred to as a head-up display system. The head-up display is mainly used to display driving information, for example, a speed and navigation on a display device (for example, a windshield) in front of a driver. In this way, a line-of-sight transfer time of the driver is reduced, and a pupil change caused by line-of-sight transfer of the driver is avoided, to improve driving safety and comfort. The HUD includes, for example, a combiner head-up display (combiner-HUD, C-HUD) system, a windshield head-up display (windshield-HUD, W-HUD) system, and an augmented reality head-up display (augmented reality HUD, AR-HUD) system. It should be understood that, the HUD may also include another type of system with evolution of technologies. This is not limited in this application.

FIG. 2 is a diagram of an example of display distribution in a vehicle cockpit according to an embodiment of this application. As shown in FIG. 2, the cockpit of the vehicle may include a display 201 (which may also be referred to as a central display screen), a display 202 (which may also be referred to as a passenger seat entertainment screen), a display 203 (which may also be referred to as an entertainment screen in a left area of a second row), a display 204 (which may also be referred to as an entertainment screen in a right area of a second row), and an instrument screen.

It should be understood that a graphical user interface (graphical user interface, GUI) in the following embodiment is described by using the five-seat vehicle shown in FIG. 2 as an example. Embodiments of this application are not limited thereto. For example, for a seven-seat sport utility vehicle (sport utility vehicle, SUV), a cockpit may include a central display screen, a passenger seat entertainment screen, an entertainment screen in a left area of a second row, an entertainment screen in a right area of a second row, an entertainment screen in a left area of a third row, and an entertainment screen in a right area of a third row. For another example, for a bus, a cockpit may include a front-row entertainment screen and a rear-row entertainment screen. Alternatively, a cockpit may include a display in a driving area and an entertainment screen in a passenger area. In an implementation, the entertainment screen in the passenger area may alternatively be disposed on the top of the cockpit.

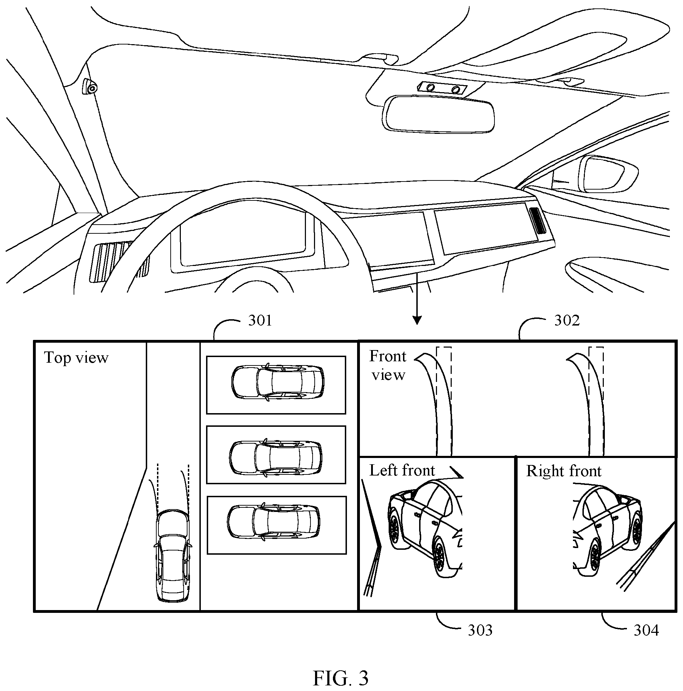

For example, FIG. 3 shows a graphical user interface (graphical user interface, GUI) according to an embodiment of this application.

As shown in FIG. 3, when detecting that the vehicle is about to pass through a narrow road, the vehicle may display, in a display area 301 in the display 201, a 360° top view, an actual traveling track (for example, a solid line shown in the area 301) corresponding to a current deflection angle of a steering wheel, and a traveling track recommended for a user (for example, a dashed line shown in the area 301). A front-view image, an actual traveling track (for example, a solid line shown in an area 302) corresponding to the current deflection angle of the steering wheel, and a traveling track recommended for the user (for example, a dashed line shown in the area 302) may be displayed in the display area 302. A driver may choose to control the steering wheel based on the recommended traveling track shown by the dashed line, so that the driver can be assisted in avoiding an obstacle to smoothly pass through the narrow road. A blind spot image of a left front side of the vehicle and a blind spot image of a right front side of the vehicle may be respectively displayed in a display area 303 and a display area 304.

In an embodiment, the driver may control the steering wheel based on the recommended traveling track when seeing the recommended traveling track. When it is detected that a coincidence degree between the actual traveling track of the vehicle and the recommended traveling track after the driver controls the steering wheel is greater than or equal to a preset coincidence degree, the driver may be prompted by using one or more of a voice prompt, a color change of an atmosphere light, or a text prompt on the in-vehicle display, so that the driver learns that the coincidence degree between the actual traveling track of the vehicle and the recommended traveling track is greater than or equal to the preset coincidence degree.

In an embodiment, when it is detected that a width difference between a width of the road and a width of the vehicle is less than or equal to a preset threshold (for example, 60 centimeters), it may be determined that the vehicle is passing through the narrow road.

In a process in which the vehicle moves forward to pass through the narrow road, a blind spot angle of view of the driver is right in front of the vehicle and in front of a side of a vehicle body. The blind spot image of the left front side of the vehicle and the blind spot image of the right front side of the vehicle are displayed on the display 201, so that the driver can perceive a collision risk in time.

In an embodiment, when the vehicle detects that there is a risk of collision between the vehicle and an obstacle (for example, a curb) located on the left front side of the vehicle, prompt information may be displayed in the display area 303, to prompt the user that there is a risk of collision. For example, the vehicle may provide a red flashing prompt in the display area 303 and activate an autonomous emergency braking function.

In this embodiment of this application, the vehicle may perceive an ambient environment of the vehicle in real time, and assist the driver in driving the vehicle to pass through the narrow road. In a process of passing through the narrow road, a top view, a front view, a blind spot view of left front of the vehicle, and a blind spot view of right front of the vehicle may be provided for the driver, and the recommended traveling track may be displayed, so as to better assist the driver in driving the vehicle to pass through the narrow road.

In an embodiment, the vehicle may actively learn and memorize the narrow road in a process of passing through the narrow road for the first time. For example, in the process of passing through the narrow road for the first time, the vehicle may perform image composition by using data collected by the sensor.

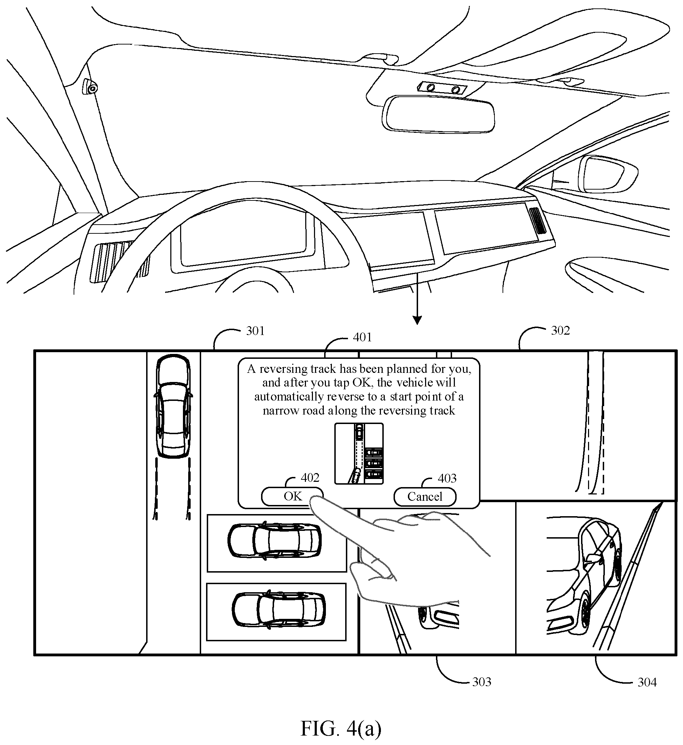

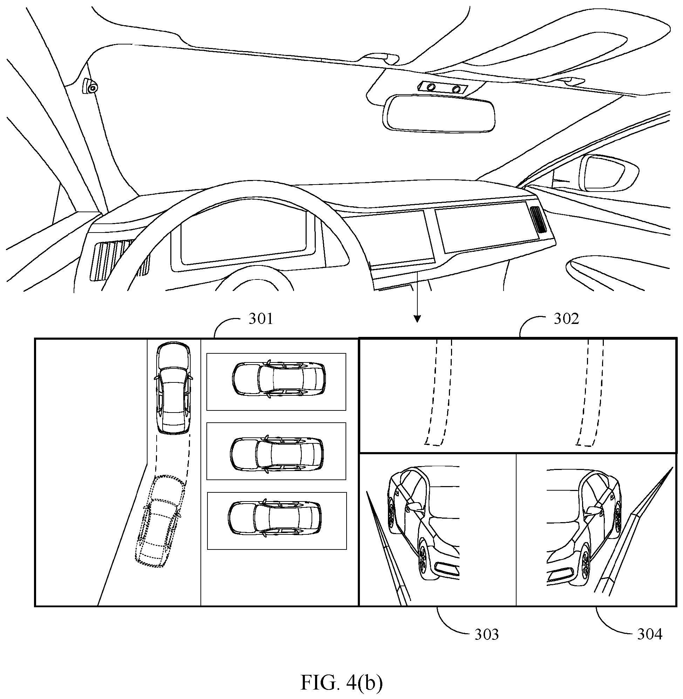

For example, FIG. 4(a) and FIG. 4(b) show a group of GUIs according to an embodiment of this application.

As shown in FIG. 4(a), in a process of passing through the narrow road, the vehicle detects that the driver adjusts a gear from a D gear to an R gear. In this case, the vehicle may plan a reversing track for the driver based on a memory of environment information of the narrow road in a previous process in which the driver drives the vehicle to pass through the narrow road. A start point of the reversing track may be a location at which the driver sends a reversing instruction (for example, the driver adjusts the gear to the R gear), and an end point of the reversing track may be a start location of the narrow road or a location of a meeting point.

For example, a prompt box 401 may be displayed on the display 201. The prompt box 401 includes prompt information "A reversing track has been planned for you, and after you tap OK, the vehicle will automatically reverse to a start point of a narrow road along the reversing track", an OK control 402, and a cancel control 403. When detecting an operation that the user taps the OK control 402, the vehicle may automatically reverse to the start point of the narrow road along the reversing track.

As shown in FIG. 4(b), in a process in which the vehicle reverses to the start point of the narrow road based on the reversing track, a 360° top view, the reversing track (for example, a dashed line shown in the area 301) planned for the driver, and the end point of the reversing track may be displayed in the display area 301 in the display 201. A rear-view image of the vehicle and the reversing track (for example, a dashed line shown in the area 302) planned for the driver may be displayed in the display area 302. A blind spot image of a right rear side of the vehicle and a blind spot image of a left rear side of the vehicle may be respectively displayed in the display area 303 and the display area 304.

In this embodiment of this application, the vehicle may learn and actively memorize an ambient environment of the narrow road when passing through the narrow road for the first time. If the vehicle needs to reverse in a process of passing through the narrow road, the reversing track may be planned for the user based on a previous result of machine learning and real-time environment perception, and a function of automatically reversing to the start point or another location of the narrow road is provided for the driver, so that a process of reversing in the narrow road is more intelligent and human-centered. This effectively helps the user resolve a problem of difficulty in reversing in the narrow road, and helps improve driving experience of the user.

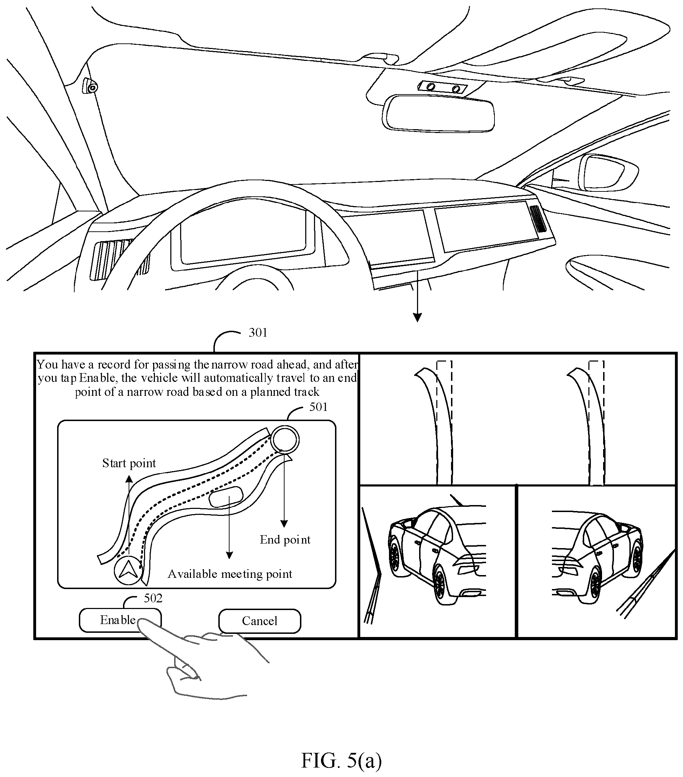

For example, FIG. 5(a) to FIG. 5(c) show another group of GUIs according to an embodiment of this application.

As shown in FIG. 5(a), when the vehicle is about to pass through a narrow road that has been learned and actively memorized, prompt information "You have a record for passing the narrow road ahead, and after you tap Enable, the vehicle will automatically travel to an end point of a narrow road based on a planned track", a display box 501, an enable control 502, and a cancel control may be displayed in the display area 301. A start point of the narrow road, information about the narrow road that has been learned and actively memorized, an available meeting point, and an end point of the narrow road may be displayed in the display box 501. In addition, the vehicle may also automatically plan a track route for passing through the narrow road based on previously learned narrow road environment. When detecting an operation that the driver taps the control 502, the vehicle may automatically pass through the narrow road based on the track route.

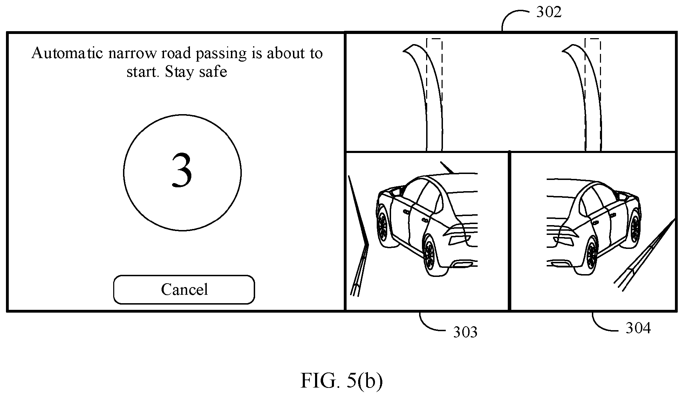

As shown in FIG. 5(b), when detecting the operation that the driver taps the control 502, the vehicle may display countdown information and a cancel control in the display area 301. When the countdown ends, if an operation that the driver cancels to automatically pass through, by the vehicle, the narrow road is not detected, the vehicle may be controlled to automatically pass through the narrow road. A front-view image, an actual traveling track (for example, a solid line shown in the area 302) corresponding to the current deflection angle of the steering wheel, and a track route (for example, a dashed line shown in the area 302) that is planned for the driver to pass through the narrow road may be displayed in the display area 302. A blind spot image of a left front side of the vehicle and a blind spot image of a right front side of the vehicle may be respectively displayed in a display area 303 and a display area 304.

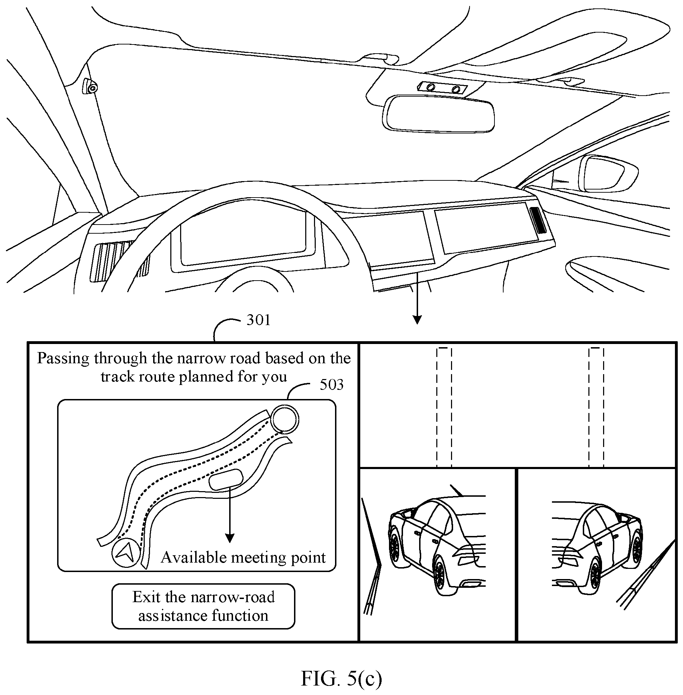

As shown in FIG. 5(c), in a process in which the vehicle automatically passes through the narrow road based on the track route, prompt information "Passing through the narrow road based on the track route planned for you", a display box 503, and a control for exiting the narrow-road assistance function may be displayed in the display area 301. The planned track route (for example, a dashed line in the display box 503) may be displayed the display box 503.

In an embodiment, when detecting an operation that the user taps the control for disabling the narrow-road assistance function, the vehicle may prompt the driver to take over the steering wheel. The driver may continue to drive the vehicle to pass through the narrow road.

In an embodiment, if the vehicle detects that there is another vehicle in the opposite direction, and the vehicle and the another vehicle cannot complete meeting at an expected meeting point (for example, the vehicle and the another vehicle cannot pass side by side at the expected meeting point), the vehicle may determine, based on the previously learned narrow-road environment, whether there is an available meeting point between a current location of the vehicle and the expected meeting point. The vehicle may give a way to the another vehicle at the available meeting point. When there is an available meeting point between the current location of the vehicle and the expected meeting point, the user may be prompted to automatically drive from the current location to the available meeting point. When detecting an operation that the user indicates to automatically travel from the current location to the available meeting point, the vehicle automatically travels from the current location to the available meeting point. When the vehicle travels to the available meeting point and detects that another vehicle passes through the available meeting point, the vehicle may prompt the user to continue to automatically travel from the available meeting point to the end point of the narrow road. When detecting an operation that the user indicates to continue to automatically travel from the available meeting point to the end point of the narrow road, the vehicle may continue to automatically travel from the available meeting point to the end point of the narrow road.

In an embodiment, when the vehicle and the another vehicle cannot complete meeting at the expected meeting point and there is no available meeting point between the current location of the vehicle and the expected meeting point, whether there is an available meeting point between the start point of the narrow road and the current location of the vehicle may be determined based on the previously learned narrow-road environment. When there is an available meeting point between the start point of the narrow road and the current location of the vehicle, the user may be prompted to reverse to the available meeting point. In addition, the vehicle may plan a reversing track from the current location of the vehicle to the available meeting point, so that the user may be prompted that the vehicle may automatically reverse to the available meeting point based on the reversing track. For example, prompt information "A reversing track has been planned for you, and after you tap OK, the vehicle will automatically reverse to an available meeting point along the reversing track" and the OK control may be displayed in the display 201. When an operation that the user taps the OK control is detected, the vehicle may be controlled to automatically reverse to the available meeting point along the reversing track.

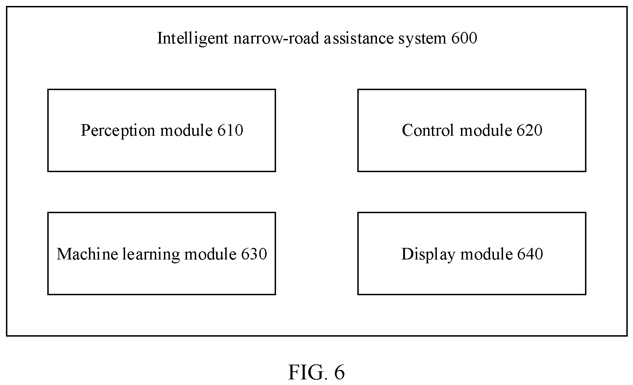

FIG. 6 is a diagram of an intelligent narrow-road assistance system 600 according to an embodiment of this application. The system 600 includes a perception module 610, a control module 620, a machine learning module 630, and a display module 640. The perception module 610 is configured to: when a vehicle passes through a narrow road A for the first time, perceive an environment in which the vehicle is located, perceive a type of the current road, perceive a location of an obstacle and a distance between the vehicle and the obstacle, perceive a heading direction of the ego vehicle, and perceive a traveling speed of the ego vehicle.

When the vehicle passes through the narrow road A for the first time, the control module 620 may control, based on data obtained by the perception module 610, the vehicle to perform anti-collision autonomous emergency braking, obstacle monitoring and warning, and narrow-road traveling track guidance. For example, as shown in FIG. 3, when the vehicle passes through a narrow road for the first time, a recommended traveling track may be planned for the user based on environment information within a perception range of the perception module 610.

In a process in which the vehicle passes through the narrow road A for the first time, the machine learning module 630 may obtain data perceived by the perception module 630, location information of the narrow road, and driving behavior of a driver, to construct an environment model of a part of the narrow road and plan a reversing track for reversing from a current location of the vehicle to another location.

When the vehicle passes through the narrow road A for the first time and has traveled from a start point to an end point of the narrow road A, the machine learning module 630 may obtain the data perceived by the perception module 630, the location information of the narrow road, and the driving behavior of the driver, to construct an environment model of the entire narrow road, plan an automatic traveling track of the vehicle from the start point to the end point of the narrow road, and plan a reversing track for reversing from the current location of the vehicle to another location.

For example, the perception module 610 may include a camera apparatus, a global positioning system, an inertial measurement unit, and a wheel odometer. The camera apparatus may include a front-view camera, a rear-view camera, and two side-view cameras (which are located on a left side and a right side of a vehicle), and the four cameras may be further provided with fisheye lenses. The front-view camera, the rear-view camera, the camera located on the left side of the vehicle, and the camera located on the right side of the vehicle may respectively output image information of the front of the vehicle, image information of the rear of the vehicle, image information of the left side of the vehicle, and image information of the right side of the vehicle to an image composition module. The machine learning module 630 may perform inverse perspective mapping (inverse perspective mapping, IPM) to synthesize the image information from four cameras into one IPM image.

The machine learning module 630 may further perform feature extraction on the IPM image. The machine learning module may input the IPM image into a U-shaped network (UNET) for feature extraction. The U-shaped network may output a semantic feature for each pixel in the IPM image. The semantic feature includes but is not limited to a curb, a stone block, a lane, a road surface indication sign, a speed bump, a wall, and an obstacle.

The foregoing describes a process of performing feature extraction through the data collected by the camera apparatus. Embodiments of this application is not limited thereto. For example, feature extraction may be further performed through data collected by a lidar, a millimeter-wave radar, or an ultrasonic radar.

After performing feature extraction on the IPM image, the machine learning module 630 may start to perform image composition. The machine learning module 630 may determine, by using the IMU and the wheel speed odometer, a location in a vehicle coordinate system constructed by the vehicle. The location in the vehicle coordinate system may be a current location of the vehicle relative to a location at which the vehicle just enters the narrow road (for example, the location at which the vehicle just enters the narrow road may be an origin in the vehicle coordinate system). Alternatively, the machine learning module 630 may determine an absolute location of the vehicle in the world coordinate system by using the global positioning system. The vehicle may build a positioning map layer by using the global positioning system, the IMU and the wheel speed odometer.

The positioning map layer is matched with the semantic feature, so that the machine learning module 630 may construct an environment model of the narrow road A.

The machine learning module 630 may calculate, based on the environment model of the narrow road A, a traveling track from the start point to the end point of the narrow road A and a reversing track for reversing from a location of the narrow road A. When the vehicle passes through the narrow road A for the first time, the machine learning module 630 may plan a local traveling track (for example, from the start point of the narrow road A to the current location of the vehicle) of the narrow road A based on data obtained within the perception range of the perception module 610. When the vehicle passes through the narrow road A for the second time, because the machine learning module 630 has completed construction of an environment model of the entire narrow road A, the machine learning module 630 may plan the traveling track from the start point to the end point of the narrow road A based on the environment model of the narrow road A.

When the vehicle passes through the narrow road A for the first time, the display module 640 may display one or more of the local traveling track of the narrow road A, an actual traveling track of the ego vehicle, a location of an obstacle, a distance between the vehicle and the obstacle, a blind spot image, and an anti-collision warning.

The perception module 610 is further configured to: when the vehicle passes through the narrow road A again, perceive an environment in which the vehicle is located, and perceive the location of the obstacle and the distance between the vehicle and the obstacle. The perception module 610 may send the perceived data to the machine learning module 630.

The machine learning module 630 may update the environment model of the narrow road A based on the data sent by the perception module 610.

For example, when the vehicle passes through the narrow road A for the first time, an obstacle 1 (for example, a stone block on a curb) in the environment model constructed by the machine learning module 630 is located at a location 1 of the narrow road A. When the vehicle passes through the narrow road A again, the machine learning module 630 determines, based on data sent by the perception module 610, that the obstacle 1 is located at a location 2 of the narrow road. In this case, the machine learning module 630 may update a location of the obstacle 1 from the location 1 to the location 2 in the environment model of the narrow road A.

For another example, when the vehicle passes through the narrow road A for the first time, there is no obstacle 2 at a location 3 of the narrow road A in the environment model constructed by the machine learning module 630. When the vehicle passes through the narrow road A again, the machine learning module 630 determines, based on the data sent by the perception module 610, that the obstacle 2 appears at the location 3 of the narrow road. In this case, the machine learning module 630 may add the obstacle 2 at the location 3 in the environment model of the narrow road A.

The machine learning module 630 may further update the traveling track from the start point to the end point of the narrow road A and the reversing track after updating the environment model of the narrow road A.

In an embodiment, the machine learning module 630 may further plan the traveling track from the start point to the end point of the narrow road A in combination of a driving habit of the driver. For example, when the user manually drives the vehicle to pass through the narrow road A, the machine learning module 630 determines that the user is accustomed to driving the vehicle close to a curb on the left of the vehicle. In this case, a distance between a left-side tire of the vehicle and the curb on the left of the vehicle in the planned traveling track may be less than a distance between a right-side tire of the vehicle and a curb on the right of the vehicle.

The machine learning module 630 is further configured to: when the vehicle passes through the narrow road A again, send the traveling track from the start point to the end point of the narrow road A to the display module 640, so that the display module 640 may display the traveling track from the start point to the end point of the narrow road A. For example, as shown in FIG. 5(c), the traveling track from the start point to the end point of the narrow road may be displayed on the display 201.

The control module 620 is further configured to: when an operation that the user chooses to automatically pass through, by the vehicle, the narrow road is detected, control, based on the traveling track from the start point to the end point of the narrow road A, the vehicle to automatically pass through the narrow road A. In a process in which the vehicle automatically passes through the narrow road A, the control module 620 may control a driving direction and a driving speed of the vehicle and avoid the obstacle based on the traveling track from the start point to the end point of the narrow road A and information about the obstacle.

The display module 640 is further configured to: when the vehicle passes through the narrow road A again, display one or more of the traveling track from the start point to the end point of the narrow road A, the location of the obstacle, the distance between the obstacle and the vehicle, and the blind spot image.

The foregoing describes actions performed by the modules when the vehicle passes through the narrow road A for the first time and passes through the narrow road A again in the intelligent narrow-road assistance system 600. For example, when a user drives a vehicle to pass through a narrow road for the first time, the intelligent narrow-road assistance system 600 may provide the user with one or more of narrow road passing track guidance, a blind spot image during narrow road passing, an obstacle monitoring and warning function, and an anti-collision autonomous emergency braking function. When the user needs to reverse in a process of driving the vehicle to pass through the narrow road, the intelligent narrow-road assistance system 600 may provide the user with one or more of automatic reversing track planning, a blind spot image during narrow road reversing, an automatic obstacle avoidance function, and an active meeting monitoring and avoidance function. When the user drives the vehicle to pass through the narrow road again, the intelligent narrow-road assistance system 600 may provide the user with one or more of automatic traveling track planning, a blind spot image during narrow road traveling, an automatic obstacle avoidance function, and an active meeting monitoring and avoidance function.

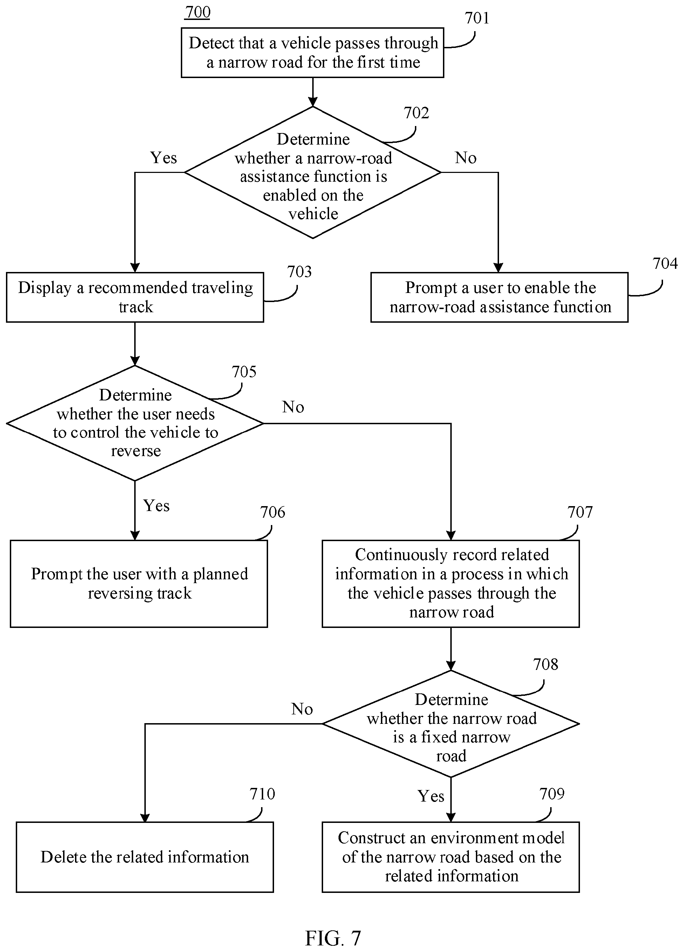

With reference to FIG. 7, the following describes a flowchart of a narrow road passing method 700 according to an embodiment of this application. As shown in FIG. 7, the method includes the following steps.

S701: Detect that a vehicle passes through a narrow road for the first time.

For example, the vehicle may obtain location information of the vehicle in real time. Whether the vehicle passes through the narrow road for the first time may be determined based on the location information of the vehicle and a type of the road.

S702: Determine whether a narrow-road assistance function is enabled on the vehicle.

For example, the vehicle may provide the user with a control for enabling or disabling the narrow-road assistance function. For example, the control for enabling or disabling the narrow-road assistance function may be located in a drop-down menu. Alternatively, the control for enabling or disabling the narrow-road assistance function may be in function settings of the vehicle.

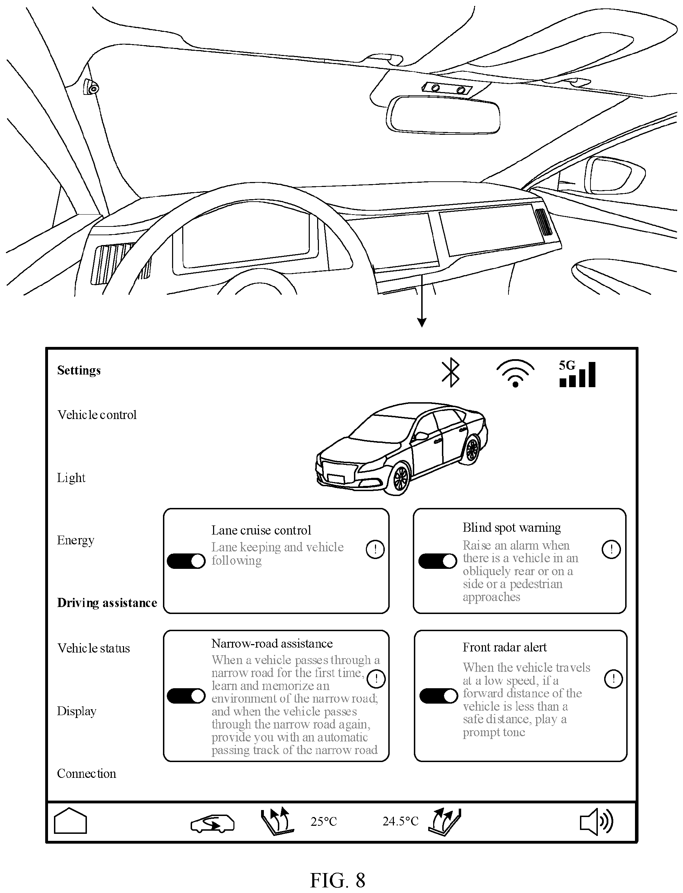

For example, in a GUI shown in FIG. 8, the user may choose to enable the narrow-road assistance function in driving assistance in the settings. A description of the narrow-road assistance function is "When a vehicle passes through a narrow road for the first time, learn and memorize an environment of the narrow road; and when the vehicle passes through the narrow road again, provide you with an automatic passing track of the narrow road".

S703: When the narrow-road assistance function is enabled on the vehicle, the vehicle may perceive an environment of the narrow road based on data collected by a sensor, to display a recommended traveling track.

In an embodiment, when the vehicle passes through the narrow road for the first time, the recommended traveling track may be planned for a user based on data within a sensing range of the sensor. For example, a traveling track within a specific distance (for example, 3 meters) is recommended for the user.

S704: When the narrow-road assistance function is not enabled on the vehicle, the user may be prompted to enable the narrow-road assistance function.

For example, text information "Detect that you are driving the vehicle to pass through a narrow lane, do you want to enable a narrow-lane assistance function? After the narrow-lane assistance function is enabled, the vehicle will learn and memorize an environment of the narrow lane" may be displayed on a display 201 or an instrument screen.

S705: In a process in which the vehicle passes through the narrow road, determine whether the user needs to control the vehicle to reverse.

S706: When it is detected that the user needs to control the vehicle to reverse, prompt the user with a planned reversing track.

In an embodiment, when it is detected that the user needs to control the vehicle to reverse, the user may be prompted with the planned reversing track, and the user may be prompted to automatically reverse to a specific location (for example, a start point of the narrow road or a location of an available meeting point). For example, when detecting an operation that the user indicates to automatically reverse from a current location to the start point of the narrow road, the vehicle may automatically control the vehicle to reverse based on the reversing track.

For example, in a process in which the user drives the vehicle to pass through the narrow road for the first time, the vehicle may learn and memorize an environment of a part of the narrow road that has been passed through, to obtain a local environment model of the narrow road. When it is detected that the user needs to control the vehicle to reverse, a reversing track may be planned based on the local environment model of the narrow road. When detecting an operation that the user indicates to automatically reverse from the current location to the start point of the narrow road, the vehicle may automatically control the vehicle to reverse based on the reversing track.

S707: When a reverse operation of the user is not detected, continuously record related information in a process in which the vehicle passes through the narrow road.

In an embodiment, the related information includes driving data of a driver and environment information of the narrow road.

For example, the driving data information of the driver includes speed information when the driver passes through the narrow road, a driving habit of the driver (for example, the driver is accustomed to driving the vehicle closer to a left curb), and the like.

For another example, the environment information includes but is not limited to location information of the narrow road, a location and a type of an obstacle, and a distance between the vehicle and the obstacle.

S708: Determine whether the narrow road is a fixed narrow road.

For example, when the vehicle determines that a height of a fixed obstacle (for example, a curb or a stone block) on two sides of the vehicle is greater than or equal to a preset height, and that a difference between a width of a road and the width of the vehicle is less than or equal to a preset width, the vehicle may determine that the current road is a fixed narrow road.

For another example, the fixed narrow road does not include a narrow road temporarily formed due to vehicle meeting, avoiding another vehicle, or the like in a process of driving on a normal road.

S709: If the narrow road is a fixed narrow road, construct an environment model of the narrow road based on the related information.

It should be understood that a process of constructing the environment model of the narrow road is described in the foregoing embodiment. For brevity, details are not described herein again.

In an embodiment, the method further includes: based on the environment model of the narrow road,

S710: If the narrow road is not a fixed narrow road, delete the related information.

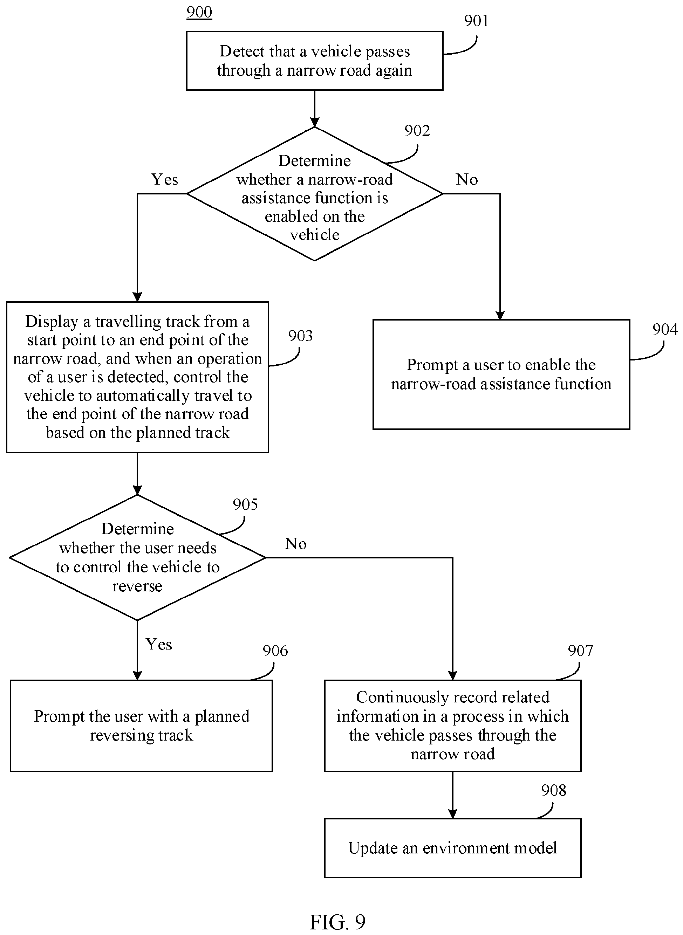

The foregoing describes, by using the method shown in FIG. 7, a process in which the vehicle passes through the narrow road for the first time. The following describes, with reference to a method shown in FIG. 9, a process in which the vehicle passes through a narrow road again.

FIG. 9 is a flowchart of a narrow road passing method 900 according to an embodiment of this application. As shown in FIG. 9, the method 900 includes the following steps.

S901: Detect that a vehicle passes through a narrow road again.

For example, the vehicle may obtain location information of the vehicle in real time. Whether the vehicle passes through the narrow road again may be determined based on the location information of the vehicle.

S902: Determine whether a narrow-road assistance function is enabled on the vehicle.

S903: When the narrow-road assistance function is enabled on the vehicle, display a traveling track from a start point to an end point of the narrow road, and when an operation of a user is detected, control the vehicle to automatically travel to the end point of the narrow road based on the planned track.

For example, as shown in FIG. 5(a), the vehicle may display prompt information "You have a record for passing the narrow road ahead, and after you tap Enable, the vehicle will automatically travel to an end point of a narrow road based on a planned track" on the display 201, and display the traveling track from the start point to the end point of the narrow road in the display box 501. When it is detected that the user taps the enable control or it is detected that the user sends a voice instruction "automatically travel to the end point of the narrow road", the vehicle may be controlled to automatically travel to the end point of the narrow road.

S904: When the narrow-road assistance function is not enabled on the vehicle, prompt the user to enable the narrow-road assistance function.

In an embodiment, when the narrow-road assistance function is not enabled on the vehicle, the user may be prompted that an environment model of the narrow-road and the traveling track from the start point to the end point of the narrow road are stored in the vehicle, and the user may be prompted to enable the narrow-road assistance function.

S905: Determine whether the user needs to control the vehicle to reverse in a process of automatically traveling to the end point of the narrow road.

S906: When it is detected that the user needs to control the vehicle to reverse, prompt the user with a planned reversing track.

In an embodiment, when it is detected that the user needs to control the vehicle to reverse, the user may be prompted with the planned reversing track, and the user may be prompted to automatically reverse to a specific location (for example, a start point of the narrow road or a location of an available meeting point). For example, when detecting an operation that the user indicates to automatically reverse from a current location to the start point of the narrow road, the vehicle may automatically control the vehicle to reverse based on the reversing track.

S907: When a reverse operation of the user is not detected, continuously record related information in a process in which the driver drives the vehicle to pass through the narrow road.

S908: Update the environment model in S709 based on the related information in S907.

In an embodiment, the environment model in S709 may be updated based on the related information in S907, and the traveling track from the start point to the end point of the narrow road A or the reversing track for reversing from a location in the narrow road may be replanned based on an updated environment model.

In this embodiment of this application, when the user drives the vehicle to pass through a narrow road again, a traveling track for automatically passing through the narrow road is recommended for the user based on previous learning and memory of the narrow road. In this way, the user does not need to manually drive the vehicle to pass through the narrow road. This helps improve intelligence of the vehicle, and helps improve driving experience of the user when the vehicle passes through the narrow road.

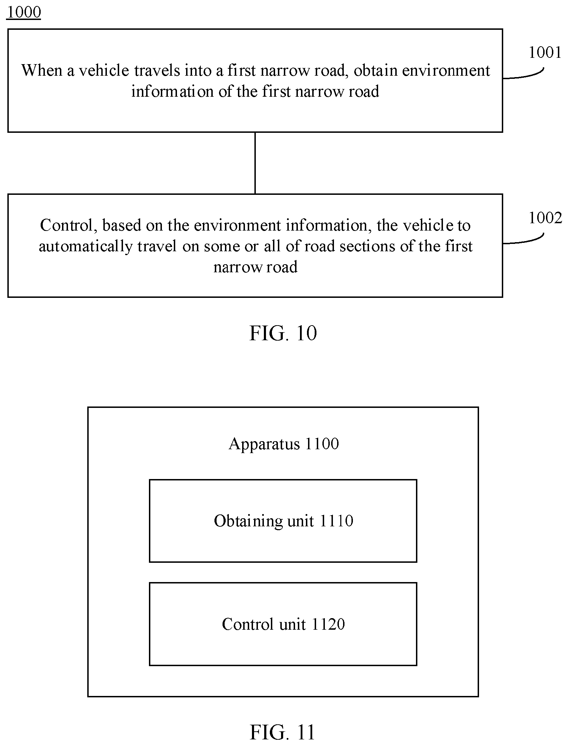

FIG. 10 is a flowchart of a narrow road passing method 1000 according to an embodiment of this application. The method 1000 may be performed by a vehicle, or the method 1000 may be performed by the foregoing computing platform, or the method 1000 may be performed by a display system including the computing platform and a display apparatus (for example, an in-vehicle display), or the method 1000 may be performed by a system-on-a-chip (system-on-a-chip, SOC) in the foregoing computing platform, or the method 1000 may be performed by a processor in the computing platform. As shown in FIG. 10, the method 1000 includes the following steps.

S1001: When a vehicle travels into a first narrow road, obtain environment information of the first narrow road.

In an embodiment, the method further includes: when a difference between a width of a road on which the vehicle is located and a width of the vehicle is less than or equal to a preset threshold, determining that the vehicle travels into the first narrow road.

For example, the preset threshold is 60 centimeters.

For example, the vehicle determines, at a moment T₁, that the vehicle travels into a road section 1, and a difference between a width of the road section 1 and a width of the vehicle is less than or equal to the preset threshold. The vehicle travels away from the road section 1 and travels into a road section 2 at a moment T₂, and a difference between a width of the road section 2 and the width of the vehicle is greater than the preset threshold. The vehicle travels away from the road section 2 and travels into a road section 3 at a moment T₃, and a difference between a width of the road section 3 and the width of the vehicle is less than or equal to the preset threshold. When a length of the road section 2 is less than or equal to a preset length, a road section including the road section 1, the road section 2, and the road section 3 may be used as a narrow road for memory. When the length of the road section 2 is greater than the preset length, the road section 1 may be used as a narrow road, and the road section 3 may be used as another narrow road for memory.

In an embodiment, when the vehicle travels into the first narrow road for the first time, the environment information of the first narrow road may be obtained by using first data collected by a sensor. When the vehicle travels into the first narrow road again, the environment information of the first narrow road may be updated by using second data collected by the sensor.

For example, the first narrow road is a narrow road A. The environment information of the first narrow road may include an environment model of the narrow road A.

In an embodiment, the method further includes: When the vehicle travels from a start point to an end point of the first narrow road, environment information of the entire first narrow road may be obtained. In this case, a traveling track for automatically traveling from the start point of the first narrow road to the end point of the first narrow road may be planned based on the environment information of the entire first narrow road. Alternatively, when the vehicle travels from the start point of the first narrow road to a specific location, environment information of a part of the first narrow road may be obtained. In this case, a traveling track for automatically reversing from a current location to a specific location (for example, the start point of the first narrow road) may be planned based on the environment information of a part of the first narrow road.

S1002: Control, based on the environment information, the vehicle to automatically travel on some or all of road sections of the first narrow road.

For example, automatically traveling on all of the road sections of the first narrow road may include automatically traveling from the start point of the first narrow road to the end point of the first narrow road, or automatically reversing from the end point of the first narrow road to the start point of the first narrow road.

For example, when automatically traveling on some of the road sections of the first narrow road includes that the vehicle travels to a location B of the first narrow road, the vehicle automatically travels from the location B to a location C of the first narrow road, where the location B may be a current location of the vehicle, and the location C may be a location of an available meeting point in the first narrow road. Alternatively, the location B may be a current location of the vehicle, and the location C may be the start point of the first narrow road. Alternatively, the location B may be the end point of the first narrow road, and the location C may be a location of an available meeting point on the first narrow road.

Optionally, before the controlling, based on the environment information, the vehicle to automatically travel on some or all of road sections of the first narrow road, the method further includes: when the vehicle travels into the first narrow road again, prompting a user to automatically pass through the first narrow road. The controlling, based on the environment information, the vehicle to automatically travel on some or all of road sections of the first narrow road includes: when an operation that the user indicates to automatically pass through the first narrow road is detected, controlling, based on the environment information, the vehicle to automatically pass through all of the road sections of the first narrow road.

For example, as shown in FIG. 5(a), when the vehicle travels into the first narrow road again, prompt information may be displayed on the in-vehicle display. The prompt information may prompt the user that "You have a record for passing the narrow road ahead, and after you tap Enable, the vehicle will automatically travel to an end point of a narrow road based on a planned track". When an operation that the user taps the enable control 502 is detected, the vehicle may automatically drive from the start point of the narrow road to the end point of the narrow road based on the planned track.

Optionally, the environment information includes a location of a first meeting point, and before the controlling, based on the environment information, the vehicle to automatically travel on some or all of road sections of the first narrow road, the method further includes: detecting that the vehicle and another vehicle meet at a first location of the first narrow road; and when the first location cannot satisfy a meeting condition, prompting the user to automatically drive from a current location of the vehicle to the location of the first meeting point. The controlling, based on the environment information, the vehicle to automatically travel on some or all of road sections of the first narrow road includes: when an operation that the user indicates to automatically travel from the current location to the location of the first meeting point is detected, controlling, based on the environment information, the vehicle to automatically travel from the current location to the location of the first meeting point.

Optionally, that the first location cannot satisfy a meeting condition includes: the first location cannot satisfy a condition that the vehicle and the another vehicle pass side by side, or the first location cannot satisfy a condition that the vehicle and the another vehicle pass at the same time.

For example, when the vehicle travels to the location C on the first narrow road, it is determined that the vehicle and the another vehicle are about to meet at a location D of the first narrow road. When the location D cannot satisfy the meeting condition, prompt information may be displayed on the in-vehicle display. The prompt information may prompt the user that "The vehicle is about to meet another vehicle in the front, and the meeting point cannot satisfy the meeting condition, and after you tap Enable, the vehicle will automatically travel to an available meeting point based on the planned track". When an operation that the user taps the enable control is detected, the vehicle may be controlled to automatically travel from the current location to the available meeting point.

The foregoing available meeting point may be located between the current location of the vehicle and a location D. In this case, when an operation that the user taps the enable control is detected, the vehicle may automatically travel from the current location to the available meeting point. Alternatively, the available meeting point may be located between the start point of the first narrow road and the current location of the vehicle. In this case, when an operation that the user taps the enable control is detected, the vehicle may automatically reverse from the current location to the available meeting point.

Optionally, before the controlling, based on the environment information, the vehicle to automatically travel on some or all of road sections of the first narrow road, the method further includes: when the vehicle travels to a second location of the first narrow road and a reverse operation of the user is detected, prompting the user to automatically reverse from the second location to a third location. The controlling, based on the environment information, the vehicle to automatically travel on some or all of road sections of the first narrow road includes: when an operation that the user indicates to automatically reverse from the second location to the third location is detected, controlling, based on the environment information, the vehicle to automatically reverse from the second location to the third location.

For example, as shown in FIG. 4(a), when a reverse operation of the user is detected, prompt information may be displayed on the in-vehicle display. The prompt information may prompt the user that "A reversing track has been planned for you, and after you tap OK, the vehicle will automatically reverse to a start point of a narrow road along the reversing track". When an operation that the user taps the OK control 402 is detected, the vehicle may automatically reverse from the current location to the start point of the first narrow road.

In an embodiment, in a process in which the vehicle travels on the first narrow road, the environment information (for example, information displayed in the display box 501 in FIG. 5(a)) of the first narrow road and the location information of the vehicle on the first narrow road may be displayed when a preset operation (for example, pushing a lever) of the user is detected. The user may select, in the display box 501, any target location to which the vehicle is expected to automatically travel. When detecting an operation that the user selects a fourth location on the first narrow road, the vehicle may plan a traveling track from the current location to the fourth location, and may automatically travel to the fourth location after the user is prompted to tap the enable control. When an operation that the user taps the enable control is detected, the vehicle may automatically travel from the current location to the fourth location.

Optionally, the third location is a start location of the narrow road or the third location is a location of a second meeting point, and the environment information includes the location of the second meeting point.

Optionally, before the obtaining environment information of the first narrow road, the method further includes: determining that the first narrow road is a fixed narrow road.

Optionally, the determining that the first narrow road is a fixed narrow road includes: determining that the first narrow road is not a temporary narrow road.

For example, when the vehicle determines that a height of a fixed obstacle (for example, a curb or a stone block) on two sides of the vehicle is greater than or equal to a preset height, and that a difference between a width of a road and the width of the vehicle is less than or equal to a preset width, the vehicle may determine that the current road is a fixed narrow road.

For another example, the fixed narrow road does not include a narrow road temporarily formed due to vehicle meeting, avoiding another vehicle, or the like in a process of driving on a normal road.

For another example, when the user drives the vehicle on a road, a temporary narrow road formed on a side road by, for example, a large truck needs to be passed through. In this case, the vehicle may activate a camera apparatus outside a cockpit and assist the user in driving through the temporary narrow road. In this case, the vehicle may not memorize environment information of the temporary narrow road.

Optionally, the method further includes: when the vehicle moves forward to pass through the first narrow road, displaying blind spot images of a left front side and a right front side of the vehicle; or when the vehicle reverses to pass through the first narrow road, displaying blind spot images of a left rear side and a right rear side of the vehicle.

For example, as shown in FIG. 3, when the vehicle moves forward to pass through the first narrow road, the display area 303 and the display area 304 in the display 201 may be used to respectively display blind spot images of a left front side and a right front side of the vehicle.

For example, as shown in FIG. 4(b), when the vehicle reverses on the first narrow road, the display area 303 and the display area 304 in the display 201 may be used to respectively display blind spot images of a right rear side and a left rear side of the vehicle.

Scenarios to which the narrow road passing method may be applied include but are not limited to the following several scenarios.
(1) One-way passages to some shopping malls and underground parking lots are very narrow. Drivers can easily scratch obstacles such as walls or posts.
(2) There are obstacles (for example, a stone block) on an intersection of a community or a restricted road, resulting in a narrow road.
(3) There are often narrow roads formed by many vehicles parked randomly on a road surface of a community. A route for a vehicle to travel on the narrow road does not change, but a shape or environment information of the narrow road irregularly changes randomly.
(4) When a user drives to a dead end when looking for a parking space in a parking lot, it is difficult or impossible for the user to turn around, and the user needs to reverse on an original road.
(5) In a process in which a vehicle travels on a narrow road, the vehicle suddenly encounters an oncoming vehicle and needs to meet the oncoming vehicle in an emergency, and the user needs to reverse to an available meeting point.

FIG. 11 is a block diagram of a narrow road passing apparatus 1100 according to an embodiment of this application. As shown in FIG. 11, the apparatus 1100 includes: an obtaining unit 1110, configured to: when a vehicle travels into a first narrow road, obtain environment information of the first narrow road; and a control unit 1120, configured to control, based on the environment information, the vehicle to automatically travel on some or all of road sections of the first narrow road.

Optionally, the apparatus further includes a first prompt unit and a first detection unit. The first prompt unit is configured to: when the vehicle travels into the first narrow road again, prompt a user to automatically pass through the first narrow road. The control unit 1120 is configured to: when the first detection unit detects an operation that the user indicates to automatically pass through the first narrow road, control, based on the environment information, the vehicle to automatically pass through all of the road sections of the first narrow road.

Optionally, the environment information includes a location of a first meeting point, and the apparatus further includes a second prompt unit and a second detection unit. The second detection unit is configured to detect that the vehicle and another vehicle meet at a first location of the first narrow road. The second prompt unit is configured to: when the first location cannot satisfy a meeting condition, prompt the user to automatically drive from a current location of the vehicle to the location of the first meeting point. The control unit 1120 is configured to: when the second detection unit detects an operation that the user indicates to automatically travel from the current location to the location of the first meeting point, control, based on the environment information, the vehicle to automatically travel from the current location to the location of the first meeting point.

Optionally, the apparatus further includes a third prompt unit and a third detection unit. The third prompt unit is configured to: when the vehicle travels to a second location of the first narrow road and the third detection unit detects a reverse operation of the user, prompt the user to automatically reverse from the second location to a third location. The control unit 1120 is configured to: when the third detection unit detects an operation that the user indicates to automatically reverse from the second location to the third location, control, based on the environment information, the vehicle to automatically reverse from the second location to the third location.

Optionally, the third location is a start location of the narrow road or the third location is a location of a second meeting point, and the environment information includes the location of the second meeting point.

Optionally, the apparatus further includes a determining unit. The method further includes: The determining unit is configured to: before the obtaining unit obtains the environment information of the first narrow road, determine that the first narrow road is a fixed narrow road.

Optionally, the control unit 1120 is further configured to: when the vehicle moves forward to pass through the first narrow road, control an in-vehicle display to display blind spot images of a left front side and a right front side of the vehicle; or when the vehicle reverses to pass through the first narrow road, control the in-vehicle display to display blind spot images of a left rear side and a right rear side of the vehicle.

For example, the obtaining unit 1110 may be the computing platform in FIG. 1, or a processing circuit, a processor, or a controller in the computing platform. For example, the obtaining unit 1110 is the processor 151 on the computing platform. When the vehicle passes through the first narrow road for the first time, the processor 151 may obtain data collected by a sensor (for example, a surround-view camera outside the cockpit, a lidar, a millimeter-wave radar, or an ultrasonic radar). The processor 151 may obtain the environment information (for example, an environment model of the narrow road A) of the first narrow road based on the data collected by the sensor. In an embodiment, the processor 151 may further plan a traveling track from a start point to an end point of the first narrow road for the vehicle based on the environment information of the first narrow road.

For example, when the vehicle passes through the first narrow road again, the processor 151 may further obtain the data collected by the sensor (for example, a surround-view camera outside the cockpit, a lidar, a millimeter-wave radar, or an ultrasonic radar). The processor 151 may update the environment information of the first narrow road based on the data collected by the sensor. For example, when the vehicle passes through the first narrow road again, the processor 151 determines, based on data collected by the sensor, that an obstacle A is newly added at the location A of the first narrow road, and may add information about the location A of the obstacle A to the environment information of the first narrow road, so that the processor 151 may further update a traveling track from a start point to an end point of the first narrow road.

For example, the control unit 1120 may be the computing platform in FIG. 1, or a processing circuit, a processor, or a controller in the computing platform. For example, the control unit 1120 is the processor 152 in the computing platform. The processor 152 may control, based on the environment information that is of the first narrow road and that is determined by the processor 151, the vehicle to automatically travel on some or all of road sections of the first narrow road.

For example, when the vehicle passes the first narrow road again, the processor 152 may control the display apparatus to display prompt information, where the prompt information is used to prompt the user that the vehicle stores the environment information of the first narrow road and that the vehicle may automatically pass through the first narrow road by using the planned traveling track. When obtaining an instruction that the user instructs to automatically pass through the first narrow road, the processor 152 may control, based on the traveling track, the vehicle to automatically pass through the first narrow road.

The function implemented by the obtaining unit 1110 and the function implemented by the control unit 1120 may be implemented by different processors, or may be implemented by a same processor. This is not limited in embodiments of this application.

It should be understood that division into the foregoing units of the apparatus is merely logical function division. In actual implementation, all or some units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a CPU or a microprocessor. The memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between elements in the circuit. For another example, in another implementation, the hardware circuit may be implemented by using a PLD. An FPGA used as an example, the hardware circuit may include a large quantity of logic gate circuits, and a connection relationship between the logic gate circuits is configured by using a configuration file, so as to implement the functions of some or all of the units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function by using a logical relationship of a hardware circuit, and the logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated and implemented in a form of a SOC. The SOC may include at least one processor, configured to implement any one of the methods or implement functions of the units of the apparatus. Types of the at least one processor may be different, for example, the at least one processor includes a CPU and an FPGA, a CPU and an artificial intelligence processor, a CPU and a GPU, or the like.

An embodiment of this application further provides an apparatus. The apparatus includes a processing unit and a storage unit. The storage unit is configured to store instructions, and the processing unit executes the instructions stored in the storage unit, so that the apparatus performs the methods or steps performed in the foregoing embodiments.

Optionally, if the apparatus is located in a vehicle, the processing unit may be the processors 151 to 15n shown in FIG. 1.

An embodiment of this application further provides a vehicle. The vehicle may include the foregoing intelligent narrow-road assistance system 600 or apparatus 1100.

An embodiment of this application further provides a computer program product. The computer program product includes computer program code, and when the computer program code is run on a computer, the computer is enabled to perform the method.

An embodiment of this application further provides a computer-readable medium. The computer-readable medium stores program code, and when the computer program code is run on a computer, the computer is enabled to perform the method.

In an implementation process, steps in the foregoing methods can be implemented by using a hardware integrated logical circuit in the processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be positioned in one position, or may be distributed on a plurality of network units. Some or all of the units may be selected based on actual requirements to achieve the objectives of the solutions in embodiments.

In addition, function units in embodiments of this application may be integrated into one processing unit, or each of the units may exist alone physically, or two or more units are integrated into one unit.

When the functions are implemented in the form of a software function unit and sold or used as an independent product, the functions may be stored in a computer-readable storage medium. Based on this understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A narrow road passing method, comprising:
when a vehicle travels into a first narrow road, obtaining environment information of the first narrow road; and
controlling, based on the environment information, the vehicle to automatically travel on some or all of road sections of the first narrow road.

2. The method according to claim 1, wherein before the controlling, based on the environment information, the vehicle to automatically travel on some or all of road sections of the first narrow road, the method further comprises:
when the vehicle travels into the first narrow road again, prompting a user to automatically pass through the first narrow road; and
the controlling, based on the environment information, the vehicle to automatically travel on some or all of road sections of the first narrow road comprises:
when an operation that the user indicates to automatically pass through the first narrow road is detected, controlling, based on the environment information, the vehicle to automatically pass through all of the road sections of the first narrow road.

3. The method according to claim 1 or 2, wherein the environment information comprises a location of a first meeting point, and before the controlling, based on the environment information, the vehicle to automatically travel on some or all of road sections of the first narrow road, the method further comprises:
detecting that the vehicle and another vehicle meet at a first location on the first narrow road; and
when the first location cannot satisfy a meeting condition, prompting the user to automatically drive from a current location of the vehicle to the location of the first meeting point; and
the controlling, based on the environment information, the vehicle to automatically travel on some or all of road sections of the first narrow road comprises:
when an operation that the user indicates to automatically travel from the current location to the location of the first meeting point is detected, controlling, based on the environment information, the vehicle to automatically travel from the current location to the location of the first meeting point.

4. The method according to any one of claims 1 to 3, wherein before the controlling, based on the environment information, the vehicle to automatically travel on some or all of road sections of the first narrow road, the method further comprises:
when the vehicle travels to a second location of the first narrow road and a reverse operation of the user is detected, prompting the user to automatically reverse from the second location to a third location; and
the controlling, based on the environment information, the vehicle to automatically travel on some or all of road sections of the first narrow road comprises:
when an operation that the user indicates to automatically reverse from the second location to the third location is detected, controlling, based on the environment information, the vehicle to automatically reverse from the second location to the third location.

5. The method according to claim 4, wherein the third location is a start location of the narrow road or the third location is a location of a second meeting point, and the environment information comprises the location of the second meeting point.

6. The method according to any one of claims 1 to 5, wherein before the obtaining environment information of the first narrow road, the method further comprises:
determining that the first narrow road is a fixed narrow road.

7. The method according to any one of claims 1 to 6, wherein the method further comprises:
when the vehicle moves forward to pass through the first narrow road, displaying blind spot images of a left front side and a right front side of the vehicle; or
when the vehicle reverses to pass through the first narrow road, displaying blind spot images of a left rear side and a right rear side of the vehicle.

8. A narrow road passing apparatus, comprising:
an obtaining unit, configured to: when a vehicle travels into a first narrow road, obtain environment information of the first narrow road; and
a control unit, configured to control, based on the environment information, the vehicle to automatically travel on some or all of road sections of the first narrow road.

9. The apparatus according to claim 8, wherein the apparatus further comprises a first prompt unit and a first detection unit, wherein
the first prompt unit is configured to: when the vehicle travels into the first narrow road again, prompt a user to automatically pass through the first narrow road; and
the control unit is configured to: when the first detection unit detects an operation that the user indicates to automatically pass through the first narrow road, control, based on the environment information, the vehicle to automatically pass through all of the road sections of the first narrow road.

10. The apparatus according to claim 8 or 9, wherein the environment information comprises a location of a first meeting point, and the apparatus further comprises a second prompt unit and a second detection unit, wherein
the second detection unit is configured to detect that the vehicle and another vehicle meet at a first location on the first narrow road;
the second prompt unit is configured to: when the first location cannot satisfy a meeting condition, prompt the user to automatically drive from a current location of the vehicle to the location of the first meeting point; and
the control unit is configured to: when the second detection unit detects an operation that the user indicates to automatically travel from the current location to the location of the first meeting point, control, based on the environment information, the vehicle to automatically travel from the current location to the location of the first meeting point.

11. The apparatus according to any one of claims 8 to 10, wherein the apparatus further comprises a third prompt unit and a third detection unit, wherein
the third prompt unit is configured to: when the vehicle travels to a second location of the first narrow road and the third detection unit detects a reverse operation of the user, prompt the user to automatically reverse from the second location to a third location; and
the control unit is configured to: when the third detection unit detects an operation that the user indicates to automatically reverse from the second location to the third location, control, based on the environment information, the vehicle to automatically reverse from the second location to the third location.

12. The apparatus according to claim 11, wherein the third location is a start location of the narrow road or the third location is a location of a second meeting point, and the environment information comprises the location of the second meeting point.

13. The apparatus according to any one of claims 8 to 12, wherein the apparatus further comprises a determining unit, and the method further comprises:
the determining unit is configured to: before the obtaining unit obtains the environment information of the first narrow road, determine that the first narrow road is a fixed narrow road.

14. The apparatus according to any one of claims 8 to 13, wherein the control unit is further configured to:
when the vehicle moves forward to pass through the first narrow road, control an in-vehicle display to display blind spot images of a left front side and a right front side of the vehicle; or
when the vehicle reverses to pass through the first narrow road, control the in-vehicle display to display blind spot images of a left rear side and a right rear side of the vehicle.

15. An apparatus, comprising:
a memory, configured to store a computer program; and
a processor, configured to execute the computer program stored in the memory, to enable the apparatus to perform the method according to any one of claims 1 to 7.

16. A vehicle, comprising the apparatus according to any one of claims 8 to 15.

17. A computer-readable storage medium, wherein the computer-readable storage medium stores a computer program, and when the computer program is executed by a computer, the computer is enabled to perform the method according to any one of claims 1 to 7.

18. A chip, wherein the chip comprises a processor and a data interface, and the processor reads, through the data interface, instructions stored in a memory, to perform the method according to any one of claims 1 to 7.
